# EUROPEAN PATENT SPECIFICATION

(11) **EP 1 193 123 B1**
(45) Date of publication and mention of the grant of the patent: **30.12.2009**
(21) Application number: 01203741.2
(22) Date of filing: 02.10.2001
(51) Int. Cl.: B60P 3/36

(54) **Mobile living quarters provided with an openable panel**
Mobile Unterkunft mit öffnungsfähigem Panel
Logement mobile muni d'un panneau ouvrant

(30) Priority: 02.10.2000 NL 1016304
(43) Date of publication of application: 03.04.2002
(73) Proprietor: POLYPLASTIC B.V., 3044 CK Rotterdam (NL)
(72) Inventor: Resibois, Raymond Marcel Louis, 6750 Signiulx (BE)
(74) Representative: Jilderda, Anne Ayolt

(56) References cited:
- WO-A-92/12315
- DE-A- 3 901 936
- DE-A- 19 725 677
- US-A- 1 750 423
- US-A- 4 784 414

## Description

The present invention relates to a mobile living quarters having a wall with an opening for a panel, wherein said panel is mounted hingedly with respect to said opening and is provided with closing means for locking the panel in an at least partly closed state, which closing means comprise at least one catch and at least one corresponding keeper which are arranged at one of said panel and an edge of said opening respectively and which are able to cooperate in order to achieve a mutually fixed state, which is manually releasable.

A mobile living quarters, such as a caravan, camper or yacht, is usually equipped with a number of panels, such as an entrance door, luggage hatches, roof hatches and side windows, which are each arranged hingedly in an opening of a wall of the accommodation. Such panels are herein normally provided with closing means to enable closing and locking of the panel. In the case of windows and roof hatches there is sometimes a choice here between a fully closed position and one or more ventilation positions, wherein the panel still leaves a larger or smaller gap to allow ventilation of the accommodation, although the panel is fixed.

The closing means of caravan windows usually comprise one or more handles provided with a catch on the window which can be carried in a turning movement behind a support surface of a corresponding keeper on the edge of the window opening. The window is herein pulled behind the support surface against the resilience of a normally arranged sealing profile, so that a clearance-free closed situation results. An example of closing means of such kind is disclosed in the generic USP 1.750.423.

In the case of smaller windows it is possible to suffice herein with one such handle, but in the case of larger size windows two or more handles will soon be required at different spots to enable effective closing of the window. This means that a correspondingly larger number of operations is required to place the window in a closed position, which is perceived as a drawback and moreover increases the risk of carelessness wherein for the sake of convenience only one handle is closed while the others are still open, and the window is thereby inadequately secured against burglary. All these handles furthermore result in unnecessary waste of time in the case of calamities and other emergency situations.

In order to be able to deal with this latter, so-called single-handed operating means for panels of mobile living quarters have been proposed, wherein an axial movement is transmitted from a handle via a cable or shaft to one or more remote spots along the edge of the panel to there urge a catch into a keeper. A problem here is that the transmission, in that case, is under strain of pressure during closing or unlocking of the panel and causes bending and buckling given the considerable resistance which, mainly as a result of the resilience of the sealing profile, is encountered between catch and keeper. This quickly causes clearance in the transmission, whereby such closing means will regularly fail to operate, and ultimately have a short lifespan. Recourse is therefore still often made in practice to closing means which have to be operated separately at all closing spots.

The invention has for its object to provide a mobile living quarters of the type stated in the preamble of claim 1 which obviates these problems by having closing means with which the panel can be closed and locked in reliable and sustained manner by means of only a single operation, even if for this purpose a locking is required at different spots.

In order to achieve the intended purpose a mobile living quarters of the type stated in the opening paragraph is characterized in that said at least one catch extends from a shaft which is rotatably mounted about a rotation axis which extends at least substantially parallel to said panel, at least at the position of said catch, in that said catch catches behind a support surface of said keeper upon rotation of said shaft about said axis, and in that said shaft is provided with manually releasable locking means to lock said shaft in a position in which said catch engages said keeper, thereby locking said panel in an at least partly closed state. Both the catch and the keeper may comprise a separate element which as such is arranged separately or be an integral part of the shaft respectively the edge of the panel opening.

The closing means according to the invention are placed into mutual cooperation by a rotation of the shaft instead of by an axial movement. Thereby, the lateral position of the closing means does not change relatively to one another, rendering the closing means markedly less susceptible to clearance than the known single-handed operating means wherein a closing part has to be displaced laterally to a complementary closing part. The shaft is also only put under strain radially, according to the invention, and not so much axially like the known closing means described above, so that clearance resulting from pressure or tension will not occur, or will only do so to a lesser extent, and the mechanism is considerably more reliable and durable, both in opening and closing of the panel.

It is noted that closing means comprising spaced apart catches which are operated single-handedly by means of a common shaft or shaft mechanism are known per se from USP 4.784.414 and DE 3901.936 in the field of vehicles and garage doors respectively. These known closing means, however, do not provide for locking means to lock the shaft in position from the inside once the panel is at least partly closed.

The shaft having thereon the catch of the closing means moreover provides the option of extending the mechanism to form a closure at different spots. In this respect a particular embodiment of the mobile living quarters according to the invention is characterized in that the shaft comprises a number of catches at different positions and that a corresponding number of keepers is arranged for cooperation with said catches. Because the catches are all arranged on the shaft, a rotation of the shaft will move all the different catches simultaneously into cooperation with the corresponding keepers. By using a shaft which has sufficient torsional stiffness, the clearance between the action of a first set of closing parts and a further set of closing parts can be limited to a minimum, whereby a particularly reliable operation is obtained.

It is often found desirable in practice not to fully close a panel of the living quarters, but to leave it slightly open to provide some ventilation of the living quarters. With a view hereto, a particular embodiment of the mobile living quarters according to the invention is characterized in that at least one catch and at least one keeper provide for a number of positions for mutual cooperation, wherein the panel is in a closed state in a first position and said panel allows for ventilation in a second position.

It is noted that the expression keeper must herein be interpreted broadly in the sense of at least a support surface which is able to cooperate with the catch such that both remain in a mutually fixed state. The support surface may particularly form part of a cup in which the catch is received. In order to provide a ventilation option, a particular embodiment of the mobile living quarters, in this respect, is characterized in that said at least one keeper comprises at least a first cup and a second cup for receiving the catch, which are arranged behind one another such that said panel is in said closed state with the catch kept in said first cup and said panel allows said ventilation with the catch kept in said second cup.

In a preferred embodiment the mobile living quarters according to the invention is characterized in that at least one keeper comprises a stop to receive the catch there against during closing of the panel, thereby forcing said shaft into rotation. When the panel is closed the catch will strike against the stop so as to urge the catch and therewith the shaft into a rotation which eventually results in a locking of the panel according to the invention. This therefore takes place automatically without requiring any further operation by the user.

With a view hereto, a further particular embodiment of the mobile living quarters according to the invention is characterized in that the catch is rounded on at least one side directed toward the stop. Owing to this rounding, or optionally chamfering, the catch, and therewith the bar connected thereto, is guided into the desired rotation. Possible further catches on the common shaft will be co-displaced in this movement, which will result in cooperation also at other locations with the keepers arranged there. The stop also has the further function in each case that the catch is thus automatically positioned precisely relative to the corresponding keeper, which enhances the tolerance of the closing mechanism.

Although the shaft with the catches can be mounted both on the edge of the opening in the wall of the accommodation and on the panel, a preferred embodiment of the mobile living quarters according to the invention is characterized in that said shaft is mounted rotatably to said panel and said at least one keeper is arranged along the edge of the opening. Mounting on the panel has the advantage that the shaft can in that case also serve as handle with which the panel can be pulled shut. Furthermore, the shaft does not thus reduce the cleerance of the opening in the wall when the panel is opened.

In the case of very large panels it is sometimes necessary to lock the panel along more sides. With a view hereto, a further particular embodiment of the mobile living quarters according to the invention is characterized in that the shaft comprises at least two shaft parts which extend at an angle relative to each other and which each comprise at least one catch, and in that both shaft parts are mutually coupled via a flexible shaft part.
With the flexible shaft part the angle between adjacent sides of the panel can be bridged, while the rotation of the shaft is transmitted to all closing parts. It is required for this purpose that the flexible shaft part can follow an angle in the panel but has sufficient torsional stiffness to transmit the rotation from the one shaft part to the other. Such flexible shaft parts are commercially available per se.

With an increase in the number of sets of closing parts, the rotational force which must be exerted with the shaft will also increase. So as to still be able to provide this force manually when there are large numbers of closing parts, a further embodiment of the mobile living quarters according to the invention is characterized in that a handle is arranged on the shaft to facilitate a manual rotation of said shaft.

Although for the shaft, carrying the catches, any profile can in principle be used which has sufficient torsional stiffness to transmit the rotation thereof in substantially clearance-free manner to different catches, a particular embodiment of the mobile living quarters according to the invention is characterized in that the shaft comprises a metal rod which guides a hollow part of said at least one catch. An, optionally hollow, metal rod providing the desired torsional stiffness is herein taken as starting point for the actual shaft. The catches are slid thereon as separate elements so that the number and the position can be freely adjusted per mobile living quarters. The number of components required for application of the invention can thereby remain limited, even in the case of a considerable variation in the nature and size of mobile living quarters. This offers particularly great advantages from a commercial as well as product engineering viewpoint.

A further embodiment of the mobile living quarters according to the invention, in this respect, is characterized in that said shaft comprises a longitudinal slit on an outer periphery thereof, and in that said hollow part of said catch comprises a longitudinal rib mating with said longitudinal slit. The rib and complementary longitudinal slit herein provide a radial locking of the catches on the shaft, so that these are fixed effectively during the rotation of the shaft and the thereby intended closing of the panel.

A particularly practical and user-friendly embodiment of the mobile living quarters according to the invention is characterized in that the locking means comprise a resilient keeper which is provided with a control member and which is able to cooperate with a further catch extending from said shaft so as to lock the further catch therein in an at least partly closed position of said panel, thus locking said shaft in a manually releasable state. In this case the panel can be readily closed with one hand, wherein for instance the shaft is used as handle in the case it is fixed to the panel, wherein the mutual cooperation of the closing means optionally takes place automatically. In the desired situation the locking means then snap fixedly to lock the shaft in the assumed position. To open the panel the control member need only be pressed to release the catch from the resilient keeper, after which the panel automatically springs further open as a result of the resilience of a sealing profile usually arranged between the panel and the edge of the opening.

The invention also relates to closing means for application in the mobile living quarters as described hereinbefore, comprising a rotatable shaft carrying at least one catch to be mounted with a rotation axis substantially parallel to a panel and comprising at least one keeper associated with said at least one catch having at least one support surface for receiving said catch upon rotation of said shaft about said rotation axis.

The invention will be further elucidated below with reference to an embodiment and an associated drawing. In the drawing:
- figure 1: shows a perspective view of a part of a wall of a mobile living quarters according to an embodiment of the invention with an opening provided with a movable panel in an opened position;
- figure 2: shows a first cross-section of the panel of figure 1 in opened state along the line II-II in figure 1;
- figure 3: shows a second cross-section of the panel of figure 1 in opened state along the line III-III in figure 1;
- figure 4: shows in cross-section a separate attachment as used for the closing means of the panel of the mobile living quarters of figure 1;
- figure 5: shows in cross-section a bar as used for the closing means of the panel of the mobile living quarters of figure 1;
- figure 6: shows the second cross-section of figure 3 at an intermediate stage in closing of the panel of the mobile living quarters of figure 1;
- figure 7: is a perspective view of a closed position of the panel of the mobile living quarters of figure 1;
- figure 8: shows a first cross-section of the panel in closed position along the line VIII-VIII in figure 7; and
- figure 9: shows a second cross-section of the panel in closed position along the line IX-IX in figure 7.
In is noted that the drawings are purely schematic and not drawn to scale. Some dimensions in particular are (greatly) exaggerated for the sake of clarity. Corresponding parts are designated where possible in the figures with the same reference numeral.

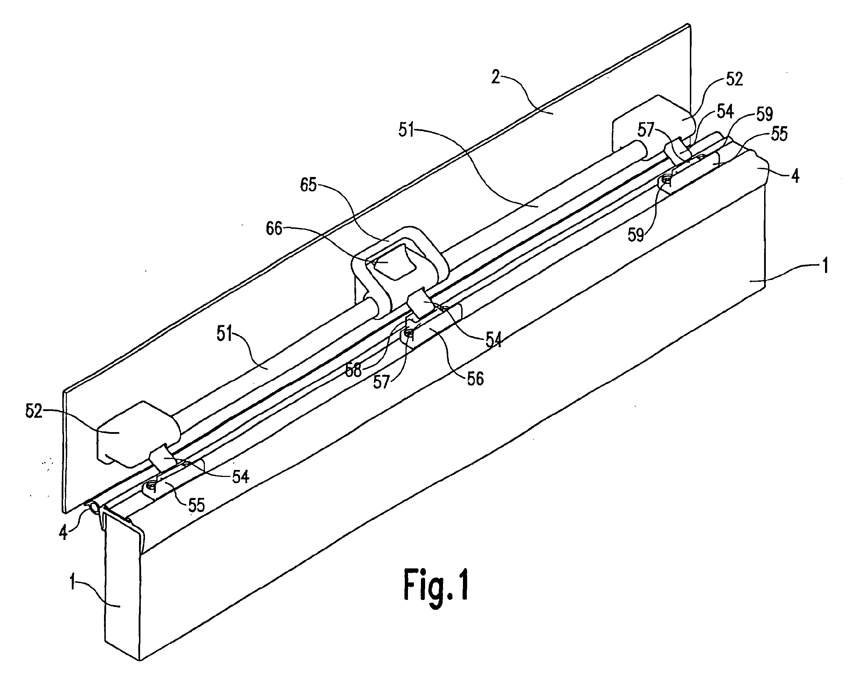

Figures 1 to 3 show schematically a part of a wall 1 of a mobile living quarters having therein a movable panel 2 which is mounted hingedly in an opening 3 in wall 1 and is situated in opened position. This embodiment relates to a caravan with an movable transparent window 2 which is suspended hingedly on a hinge shaft not shown in the drawing. Although the wall is drawn in this case as one piece, the wall of a mobile living quarters in practice usually comprises a sandwich construction of two relatively hard shells with an insulating material in between. The desired opening 3 is later sawn or otherwise formed therein and then finished with a sealing profile 4 of natural or synthetic rubber. The window is also drawn here simply as single-walled, although in practice double-walled windows from two glued together plate parts of a suitable transparent plastic, such as polymethyl methacrylate and polycarbonate, are also often applied for caravans.

To enable closing of window 2 or fixing thereof in a ventilation position, window 2 is provided with closing means. The closing means comprise a shaft in the form of a relatively torsionally stiff metal rod 51 which is mounted on the window in a number of holders 52,53 for rotation about a rotation axis running parallel to the window. For this purpose the rod 51 is received rotatably in two end pieces 52, in which the shaft is received in blind ends, and in an intermediate part 53 with a fully continuous bore. Intermediate part 53 is otherwise provided with locking means 62.65, which will be further described hereinafter and which allow the rod 51 to be locked in a position corresponding to an optionally fully closed position of window 2.

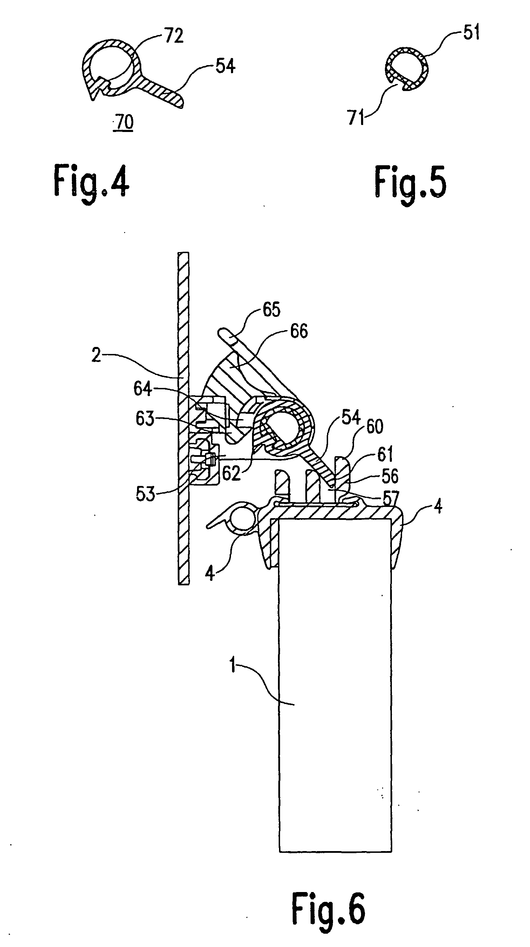

Situated on rod 51 are three catches 54 which extend substantially radially therefrom. Although catches 54 could be formed integrally with the rod, separate hollow attachments 70 which can be guided onto rod 51, see figure 4 and 5, are more preferably used, as is the case here. Attachments 70 can be manufactured as desired from metal or from a suitable plastic, wherein particularly in the latter case a moulded part is preferably used for reasons of cost. For an effective fixation of hollow parts 70 on rod 51, the rod is provided along its full length with a longitudinal slit 71 into which a longitudinal rib 72 in the cavity of parts 70 is close-fittingly received. The longitudinal rib 72 serves on the one hand for a precise alignment of parts 70 relative to each other, so that they all have the same position, and serves on the other hand to fixate the parts during a rotation of rod 51 to prevent the parts to rotate as well. The longitudinal slit 71 can be cut or otherwise formed in rod 51 at a later stage, but it is also possible to take as starting point for rod 51 an extrusion profile, for instance of aluminium, in which the slit 71 is formed at the outset.

The closing means further comprise three keepers 55,56 which are arranged on an edge of window opening 3 adjacent to the rod. The keepers 55,56 each comprise a cup 57 for receiving therein the corresponding catch 54,55 of rod 51 in an at least partly closed position, as will become further apparent below. Keepers 55,56 are here formed by separate plastic or metal parts which, owing to bores 59 provided therein, can later be readily mounted in opening 3 of wall 1 using screws or other fastening members.

For the purpose of closing, window 2 is for instance pulled shut with rod 51, the rod 51 herein serving as handle. At a certain point the catches will strike against a raised part 60 of the keepers which serves as stop, see figure 6. Catches 54 are rounded on their free end 61, so that they are now automatically guided downward into cup 57, wherein rod 51 is urged into rotation. Owing to the rotation of rod 51, which mutually connects all catches 54, all catches 54 will simultaneously enter into a cooperation with keepers 57 on the edge of opening 3. Particularly the resilience of sealing profile 4 must be overcome here. This is because keepers 55,56 are placed at a distance relative to the window such that the catches eventually lie under tension of the resilience of sealing profile 4 in the cups of keepers 55,56, so that window 2 is finally closed in clearance-free manner. In the case of larger windows with a corresponding large number of closing spots where closing means are arranged, a handle 65 extending from rod 51 helps to bring about the rotation of rod 51. This handle 65 can also be used as handle for window 2 which can be pulled shut or pushed open therewith.

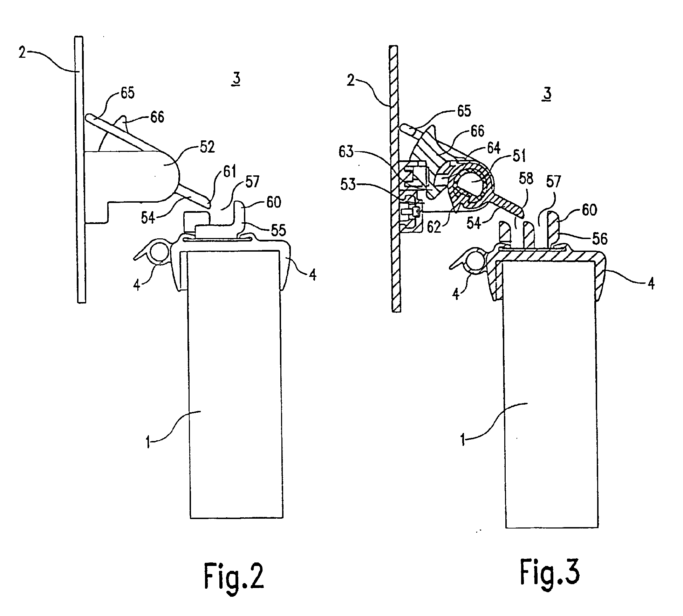

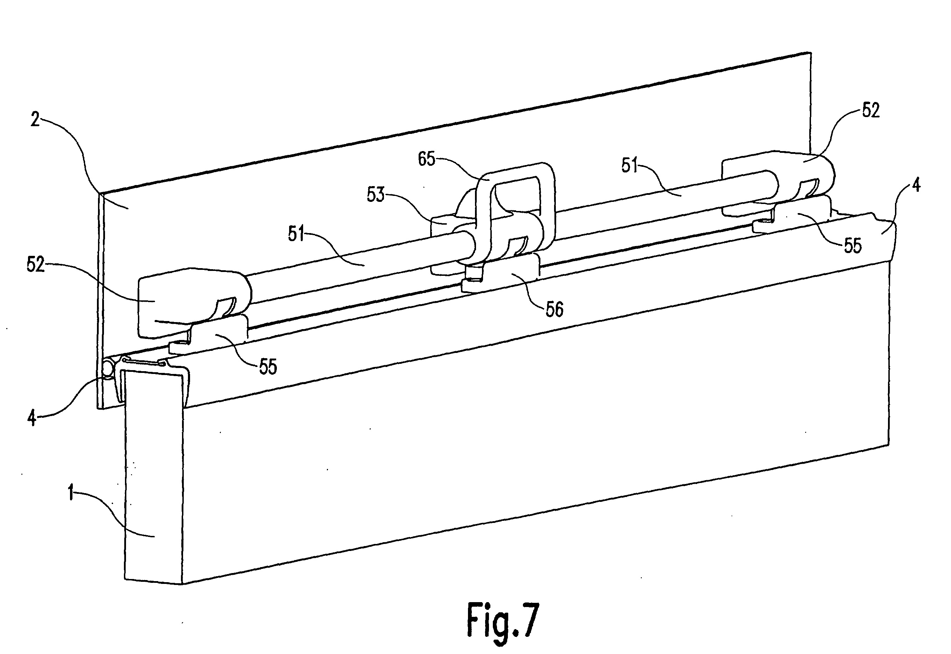

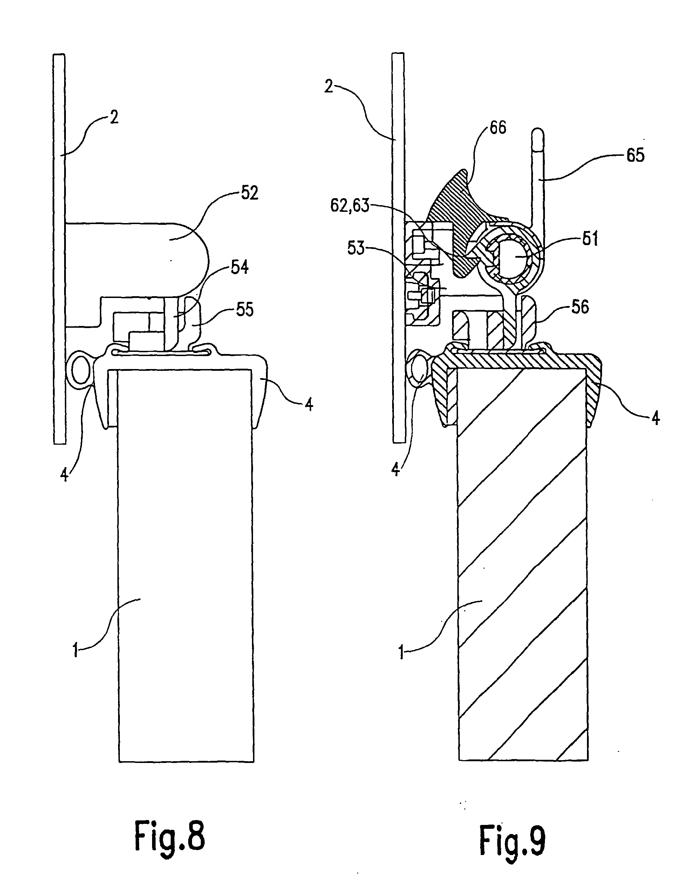

During rotation of rod 51 a further catch 62 extending from rod 51, see figures 3,6 and 9, will also touch a resilient keeper 63 of locking means arranged on intermediate part 53. Resilient keeper 63 is thereby urged in the direction of window 2 until the catch falls into cup 64 of keeper 63. Keeper 63 now springs back slightly and thus locks rod 51 in the thus assumed position, wherein catches 54 point vertically downward and lie enclosed in keepers 55,56, see figures 7-9. The window is now closed. Owing to the resilience of the sealing profile the catches 54 are pushed firmly against the edge of the cups 57 in keepers 55,56, thereby creating a clearance-free situation.

The resilient keeper 63 is provided with a control member 66 in the form of a manually operable push button with which the locked state can be released and window 2 can be unlocked. Owing to the resilience of sealing profile 4 the window 2 automatically springs open a little, after which it can be placed in the desired open position. The window can thus be both closed and opened at a plurality of locations with only a single operation, which makes the mobile living quarters according to the invention particularly user-friendly.

In order to also provide a ventilation position of window 2, at least one of the keepers, here the middle one, is provided with at least one further cup 58 which lies between closing cup 57 and the window 2. Using handle 65 or by directly rotating shaft 51 the corresponding catch 54 can be carried into such an intermediate cup 58, wherein a fixed gap is left between wall 1 of the accommodation and window 2. Because the resilience of sealing profile 4, other than during closing of window 2, does not provide an opposing force here, only a slight physical effort suffices to accomplish this.

Although the invention has been further elucidated above with reference to only a single embodiment, it will be apparent that the invention is by no means limited to the given example. On the contrary, many more variations and embodiments are possible for a skilled person without departing from the scope of the present invention. The invention can thus be applied not only for a window, it can also be advantageously applied for other movable panels such as normally occur in mobile living quarters such as, in addition to windows, also roof hatches, doors, luggage hatches, dome lights and the like. The number of closing spots can also be increased as desired to more than three or be limited to only one or two. The torsionally stiff shaft which mutually connects the catches herein always ensures simultaneous operation of all catches. It is herein also possible for the closing points to be situated on different sides of the window. According to the invention a shaft part which is torsionally stiff but flexible is in that case preferably used to mutually connect shaft parts on successive sides of the window, such as for instance a link chain or other product which is commercially available per se for this purpose.

Nor does the rod have to be mounted on the window, but can also be placed in the edge of the opening, wherein the second closing means will be situated on the window. Closing parts in the form of catches and keepers, can also be applied in the form of for instance hooks engaging around pins. What is important is that at different positions along the edge of the panel the action of the closing parts is transmitted from the one to another and takes place simultaneously. Finally, the locking means are also given solely by way of example, and although particularly user-friendly and of practical nature, they can also be embodied in different manner.

## Claims

1. Mobile living quarters having a wall (1) with an opening (3) for a panel (2), wherein said panel is mounted hingedly with respect to said opening and is provided with closing means (54..56,62..66) for locking the panel in an at least partly closed state, which closing means comprise at least one catch (54) and at least one corresponding keeper (55,56) which are arranged at one of said panel and an edge of said opening respectively and which are able to cooperate in order to achieve a mutually fixed state, which is manually releasable, **characterized in that** said at least one catch (54) extends from a shaft (51) which is rotatably mounted about a rotation axis which extends at least substantially parallel to said panel (2), at least at the position of said catch (54), **in that** said catch (54) catches behind a support surface of said keeper (55,56) upon rotation of said shaft (51) about said axis, and **in that** said shaft is provided with manually releasable locking means (62,63) to lock said shaft in a position in which said catch engages said keeper, thereby locking said panel in an at least partly closed state.

2. Mobile living quarters as claimed in claim 1, **characterized in that** the shaft (51) comprises a number of catches (54) at different positions and that a corresponding number of keepers (55,56) is arranged for cooperation with said catches.

3. Mobile living quarters as claimed in claim 1 or 2, **characterized in that** at least one catch (54) and at least one keeper (56) provide for a number of positions for mutual cooperation, wherein the panel (2) is in a closed state in a first position and said panel allows for ventilation in a second position.

4. Mobile living quarters as claimed in claim 3, **characterized in that** said at least one keeper (56) comprises at least a first cup (57) and a second cup (58) for receiving the catch (54), which are arranged behind one another such that said panel is in said closed state with the catch kept in said first cup (57) and said panel allows said ventilation with the catch kept in said second cup (58).

5. Mobile living quarters as claimed in any of the preceding claims, **characterized in that** at least one keeper (56) comprises a stop (60) to receive the catch there against during closing of the panel, thereby forcing said shaft into rotation.

6. Mobile living quarters as claimed in claim 5, **characterized in that** the catch is rounded on at least one side (61) directed toward the stop (60).

7. Mobile living quarters as claimed in any of the preceding claims, **characterized in that** said shaft (51) is mounted rotatably to said panel (2) and said at least one keeper (55,56) is arranged along the edge of the opening.

8. Mobile living quarters as claimed in any of the preceding claims, **characterized in that** the shaft (51) comprises at least two shaft parts which extend at an angle relative to each other and which each comprise at least one catch (54), and **in that** both shaft parts are mutually coupled via a flexible shaft part.

9. Mobile living quarters as claimed in any of the preceding claims, **characterized in that** a handle (65) is arranged on the shaft to facilitate a manual rotation of said shaft.

10. Mobile living quarters as claimed in any of the preceding claims, **characterized in that** the shaft comprises a metal rod which guides a hollow part of said at least one catch.

11. Mobile living quarters as claimed in claim 10, **characterized in that** said shaft comprises a longitudinal slit (71) on an outer periphery thereof, and **in that** said hollow part of said catch comprises a longitudinal rib (72) mating with said longitudinal slit.

12. Mobile living quarters as claimed in any of the preceding claims, **characterized in that** the locking means comprise a resilient keeper (63) which is provided with a control member (66) and which is able to cooperate with a further catch (62) extending from said shaft (51) so as to lock the further catch therein in an at least partly closed position of said panel, thus locking said shaft in a manually releasable state.

13. Closing means for application in the mobile living quarters as claimed in any of the preceding claims, comprising a rotable shaft (51) carrying at least one catch (54) to be mounted with a rotation axis substantially parallel to a panel and comprising at least one keeper (55,56) associated with said at least one catch having at least one support surface for receiving said catch upon rotation of said shaft about said rotation axis.

## Patentansprüche

1. Mobile Unterkunft, die eine Wand (1) aufweist, mit einer Öffnung (3) für ein Panel (2), wobei das Panel in Bezug auf die Öffnung gelenkig angeordnet ist und Verschlussvorrichtungen (54-56, 62-66) zum Feststellen des Panels in einem zumindest teilweise geschlossenen Zustand aufweist, wobei die Verschlussvorrichtungen (54-56, 62-66) zumindest eine Arretierung (54) und zumindest einen korrespondierenden Anker (55, 56) aufweisen, die jeweils auf dem Panel und einem Rand der Öffnung angeordnet sind und die miteinander zusammenwirken können, um einen gemeinsam geschlossenen Zustand zu erhalten, der manuell lösbar ist, **dadurch gekennzeichnet, dass** die zumindest eine Arretierung (54) sich von einem Schaft (51) weg erstreckt, der um eine Rotationsachse rotierbar angeordnet ist, die sich zumindest im Bereich der Arretierung (54) zumindest im Wesentlichen parallel zu dem Panel (2) erstreckt, dass die Arretierung (54) hinter einer Auflagefläche des Ankers (55, 56) nach Rotation des Schaftes (51) um die Achse arretiert, und **dadurch**, dass der Schaft manuell lösbare Feststellvorrichtungen (62, 63) aufweist, um den Schaft in einer Position, in der die Arretierung (54) mit dem Anker (55, 56) zusammenwirkt, festzustellen, wodurch das Panel in einem zumindest teilweise geschlossenen Zustand festgestellt wird.

2. Mobile Unterkunft nach Anspruch 1, **dadurch gekennzeichnet, dass** der Schaft (51) eine Mehrzahl von Arretierungen (54) an verschiedenen Positionen aufweist und dass eine entsprechende Anzahl von Ankern (55, 56) zum Zusammenwirken mit den Arretierungen angeordnet ist.

3. Mobile Unterkunft nach Anspruch 1 oder 2, **dadurch gekennzeichnet, dass** zumindest eine Arretierung (54) und zumindest ein Anker (56) eine Mehrzahl von Stellungen zum gemeinsamen Zusammenwirken aufweisen, worin das Panel (2) in einer ersten Stellung in einem geschlossenen Zustand ist und in einer zweiten Stellung eine Belüftung ermöglicht.

4. Mobile Unterkunft nach Anspruch 3, **dadurch gekennzeichnet, dass** zumindest ein Anker (56) zumindest ein erstes Lager (57) und ein zweites Lager (58) zum Aufnehmen der Arretierung (54) aufweist, die hintereinander angeordnet sind, so dass das Panel in dem geschlossenen Zustand ist, wenn die Arretierung in dem ersten Lager (57) angeordnet ist und das Panel die Belüftung ermöglicht, wenn die Arretierung in dem zweiten Lager (58) angeordnet ist.

5. Mobile Unterkunft nach einem der vorhergehenden Ansprüche, **dadurch gekennzeichnet, dass** zumindest ein Anker (56) einen Anschlag (60) zur Aufnahme der Arretierung gegen sich während des Schließens des Panels aufweist, wodurch der Schaft in Rotation versetzt wird.

6. Mobile Unterkunft nach Anspruch 5, **dadurch gekennzeichnet, dass** die Arretierung zumindest auf einer Seite (61) abgerundet ist, die zu dem Anschlag (60) hin ausgerichtet ist.

7. Mobile Unterkunft nach einem der vorhergehenden Ansprüche, **dadurch gekennzeichnet, dass** der Schaft (51) rotierbar an dem Panel (2) angeordnet ist und der zumindest eine Anker (54, 56) entlang des Randes der Öffnung angeordnet ist.

8. Mobile Unterkunft nach einem der vorhergehenden Ansprüche, **dadurch gekennzeichnet, dass** der Schaft (51) zumindest zwei Schaftteile aufweist, die sich in einem Winkel zueinander erstrecken und die jeweils zumindest eine Arretierung (54) aufweisen, und dadurch, dass beide Schaftteile miteinander über ein flexibles Schaftteil verbunden sind.

9. Mobile Unterkunft nach einem der vorhergehenden Ansprüche, **dadurch gekennzeichnet, dass** ein Griff (65) an dem Schaft angeordnet ist, um eine manuelle Rotation des Schaftes zu ermöglichen.

10. Mobile Unterkunft nach einem der vorhergehenden Ansprüche, **dadurch gekennzeichnet, dass** der Schaft einen Metallstab aufweist, auf dem ein hohler Abschnitt der zumindest einen Arretierung (54) geführt wird.

11. Mobile Unterkunft nach Anspruch 10, **dadurch gekennzeichnet, dass** der Schaft eine längliche Nut (71) auf einem äußeren Umfang von ihm aufweist, und dadurch, dass der hohle Abschnitt der Arretierung eine längliche Feder (72) aufweist, die mit der länglichen Nut ineinander greift.

12. Mobile Unterkunft nach einem der vorhergehenden Ansprüche, **dadurch gekennzeichnet, dass** die Feststellvorrichtung einen elastischen Anker (63) aufweist, der ein Steuerelement (66) aufweist und der mit einer weiteren Arretierung (62), die sich von dem Schaft (51) erstreckt, so zusammenwirken kann, dass die weitere Arretierung in ihm in einem zumindest teilweise geschlossenen Zustand des Panels festgestellt werden kann, wodurch der Schaft demzufolge in einem manuell lösbaren Zustand festgestellt wird.

13. Verschlussvorrichtung zur Anwendung in einer mobilen Unterkunft entsprechend einem der vorhergehenden Ansprüche, die ein rotierbaren Schaft (51) aufweist, der zumindest eine Arretierung (54) trägt, zum Anordnen mittels einer im Wesentlichen parallel zu einem Panel angeordneten Rotationsachse, und die zumindest einen Anker (55, 56) aufweist, der zu der zumindest einen Arretierung gehört, und zumindest eine Auflagefläche zur Aufnahme der Arretierung nach Rotation des Schaftes um seine Rotationsachse aufweist.

## Revendications

1. Logement mobile ayant une paroi (1) avec une ouverture (3) pour un panneau (2), dans lequel ledit panneau est monté de manière articulée par rapport à ladite ouverture et est prévu avec des moyens de fermeture (54 ... 56, 62 ... 66) pour fermer le panneau dans un état au moins partiellement fermé, lesquels moyens de fermeture comprennent au moins un loquet (54) et au moins une gâche (55, 56) correspondante qui sont agencés sur l'un parmi ledit panneau et un bord de ladite ouverture respectivement et qui peuvent coopérer afin d'atteindre un état mutuellement fixe, qui est manuellement amovible, **caractérisé en ce que** ledit au moins un loquet (54) s'étend à partir d'un arbre (51) qui est monté de manière rotative sur un axe de rotation qui s'étend de manière au moins sensiblement parallèle audit panneau (2), au moins dans la position dudit loquet (54), **en ce que** ledit loquet (54) s'accroche derrière une surface de support de ladite gâche (55, 56) suite à la rotation dudit arbre (51) autour dudit axe, et **en ce que** ledit arbre est prévu avec des moyens de verrouillage (62, 63) manuellement amovibles pour verrouiller ledit arbre dans une position dans laquelle ledit loquet met en prise ladite gâche, verrouillant ainsi ledit panneau dans un état au moins partiellement fermé.

2. Logement mobile selon la revendication 1, **caractérisé en ce que** l'arbre (51) comprend un certain nombre de loquets (54) à différentes positions et qu'un nombre correspondant de gâches (55, 56) est agencé pour la coopération avec lesdits loquets.

3. Logement mobile selon la revendication 1 ou 2, **caractérisé en ce que** le au moins un loquet (54) et au moins une gâche (56) fournissent un certain nombre de positions pour la coopération mutuelle, dans lequel le panneau (2) est dans un état fermé dans une première position et ledit panneau permet la ventilation dans une seconde position.

4. Logement mobile selon la revendication 3, **caractérisé en ce que** ledit au moins une gâche (56) comprend au moins une première cuvette (57) et une seconde cuvette (58) pour recevoir le loquet (54), qui sont agencées l'une derrière l'autre de sorte que ledit panneau est dans ledit état fermé avec le loquet maintenu dans ladite première cuvette (57) et ledit panneau permet ladite ventilation avec le loquet maintenu dans ladite seconde cuvette (58).

5. Logement mobile selon l'une quelconque des revendications précédentes, **caractérisé en ce qu'**au moins une gâche (56) comprend une butée (60) pour recevoir le loquet contre celle-ci pendant la fermeture du panneau, forçant ainsi ledit arbre en rotation.

6. Logement mobile selon la revendication 5, **caractérisé en ce que** le loquet est arrondi sur au moins un côté (61) dirigé vers la butée (60).

7. Logement mobile selon l'une quelconque des revendications précédentes, **caractérisé en ce que** ledit arbre (51) est monté de manière rotative sur ledit panneau (2) et ledit au moins une gâche (55, 56) est agencé le long du bord de l'ouverture.

8. Logement mobile selon l'une quelconque des revendications précédentes, **caractérisé en ce que** l'arbre (51) comprend au moins deux parties d'arbre qui s'étendent selon un angle l'une par rapport à l'autre et qui comprennent chacune au moins un loquet (54) et **en ce que** les deux parties d'arbre sont mutuellement couplées par l'intermédiaire d'une partie d'arbre flexible.

9. Logement mobile selon l'une quelconque des revendications précédentes, **caractérisé en ce qu'**une poignée (65) est agencée sur l'arbre afin de faciliter une rotation manuelle dudit arbre.

10. Logement mobile selon l'une quelconque des revendications précédentes, **caractérisé en ce que** l'arbre comprend une tige métallique qui guide une partie creuse dudit au moins un loquet.

11. Logement mobile selon la revendication 10, **caractérisé en ce que** ledit arbre comprend une fente longitudinale (71) sur sa périphérie externe, et **en ce que** ladite partie creuse dudit loquet comprend une nervure longitudinale (72) qui se couple avec ladite fente longitudinale.

12. Logement mobile selon l'une quelconque des revendications précédentes, **caractérisé en ce que** les moyens de verrouillage comprennent une gâche élastique (63) qui est prévu avec un élément de commande (66) et qui peut coopérer avec un loquet supplémentaire (62) qui s'étend à partir dudit arbre (51) afin de verrouiller le loquet supplémentaire à l'intérieur de celui-ci dans au moins une position partiellement fermée dudit panneau, verrouillant ainsi ledit arbre dans un état manuellement amovible.

13. Moyens de fermeture pour l'application dans le logement mobile selon l'une quelconque des revendications précédentes, comprenant un arbre rotatif (51) supportant au moins un loquet (54) destiné à être monté avec un axe de rotation sensiblement parallèle à un panneau et comprenant au moins une gâche (55, 56) associé audit au moins un loquet ayant au moins une surface de support pour recevoir ledit loquet suite à la rotation dudit arbre autour dudit axe de rotation.
